## Europäisches Patentamt
## European Patent Office
## Office européen des brevets

(19)

(11) Veröffentlichungsnummer: **0 034 996**
**B1**

(12) **EUROPÄISCHE PATENTSCHRIFT**

(45) Veröffentlichungstag der Patentschrift:
**11.07.84**

(21) Anmeldenummer: **81710004.3**

(22) Anmeldetag: **19.02.81**

(51) Int. Cl.³: **F 16 L 41/02, F 24 D 3/10**

(54) **Rohrverteiler für Heizungsanlagen.**

(30) Priorität: **22.02.80 DE 3006784**

(43) Veröffentlichungstag der Anmeldung:
**02.09.81 Patentblatt 81/35**

(45) Bekanntmachung des Hinweises auf die Patenterteilung:
**11.07.84 Patentblatt 84/28**

(84) Benannte Vertragsstaaten:
**AT BE CH DE FR GB IT LI LU NL SE**

(56) Entgegenhaltungen:
**DE - A - 1 679 374**
**DE - A - 2 637 243**

**Reeknagel-Sprenger, Taschenbuch für Heizung und
Klimatechnik, Verlag R. Oldenbourg, München Wien, 60
Ausgabe 1979, Seite 1393, Abs. 1**

(73) Patentinhaber: **Maile + Grammer GmbH, Kornstrasse 1,
D-7407 Rottenburg 15 (DE)**

(72) Erfinder: **Grammer, Meinrad, Geigerweg 4,
D-7407 Rottenburg 15 (DE)**

(74) Vertreter: **Ott, Elmar, Dipl.-Ing., Kappelstrasse 8,
D-7240 Horb 1 (DE)**

**Beschreibung**

Die Erfindung betrifft einen Rohrverteiler für Heizungsanlagen, dessen Gehäuse durch eine Trennwand in eine Vorlauf- und eine Rücklaufkammer unterteilt ist, der zum Anschliessen von Vorlauf- und Rücklaufleitungen senkrecht zur Trennwand angeordnete Anschlussstutzen hat, von denen die einen durch im Gehäuse befindliche Durchführungen bis zu in der Trennwand vorgesehene Öffnungen durchgeführt sind und die anderen direkt an im Gehäuse vorgesehenen Öffnungen aufgesetzt sind, sowie ein Verfahren zu dessen Herstellung.

Rohrverteiler, die in eine Vorlauf- und eine Rücklaufkammer unterteilt sind, werden in Heizungsanlagen zur Verteilung des Wärmeträgers auf verschiedene Heizkreise eingesetzt. Von der Vorlaufkammer gelangt der Wärmeträger in einen Heizkreis, z.B. in die Rohre einer Fussbodenheizung. Der Wärmeträger gelangt dann wieder zurück zum Rohrverteiler, wo er in die Rücklaufkammer geführt wird.

Aus der DE-C-2 116 982 ist ein Rohrverteiler bekannt, dessen Anschlussstutzen senkrecht zur Trennwand angeordnet sind. Bei diesem bekannten Rohrverteiler sind die Anschlussstutzen sowohl mit der Trennwand, sofern sie bis zur Trennwand durchgeführt sind, als auch mit der Gehäusewand durch Schweissverbindungen verbunden.

Aus der DE-A-1 679 374 ist ein Verteiler für Heizungsanlagen bekannt, der durch eine waagerechte Trennwand in zwei Kammern unterteilt ist. Die Hauptleitungen für den Vor- und Rücklauf sind senkrecht zur waagerechten Trennwand angeordnet. Als Durchführungen besitzt dieser bekannte Rohrverteiler jeweils eine dicht in die Kammern eingesetzte Büchse, die eine grössere lichte Weite hat als der Durchmesser der zugehörigen Hauptleitung. Die als Steigleitungen ausgebildeten Hauptleitungen sind jeweils mit der Kammer verschweisst, in die sie einmünden.

Der Erfindung liegt die Aufgabe zugrunde, einen Rohrverteiler mit waagerechter Trennwand zu schaffen, dessen Anschlussstutzen wenigstens im Bereich der Trennwand ohne Schweissnaht befestigt sind und dessen Anschlussstutzen mit dem Gehäuse auf einfache Weise verschweisst oder verlötet werden können.

Die Lösung dieser Aufgabe wird bei einem Rohrverteiler der eingangs genannten Gattung mit den im Patentanspruch 1 angegebenen Merkmalen erhalten. Der erfindungsgemässe Rohrverteiler benötigt somit zur Verbindung der Anschlussstutzen mit der Trennwand keinen Schweiss- oder Lötvorgang. Alleine durch die Presspassung werden dichte und mechanisch stabile Verbindungen zwischen den durchgeführten Anschlussstutzen und der Trennwand hergestellt. Durch die Massnahme, dass die kürzeren, nicht bis zur Trennwand hindurchgeführten Anschlussstutzen mit dem Gehäuse mittels Presspassung verbunden sind, erhält man eine wesentliche Fertigungsvereinfachung. Die derart befestigten Anschlussstutzen brauchen nämlich nicht mehr mit Schweisspunkten fixiert zu werden, bevor sie zur Erhöhung der machanischen Stabilität mit dem Gehäuse verschweisst oder verlötet werden.

Aus dem «Taschenbuch für Heizung und Klimatechnik», R. Oldenbourg München Wien 1979, 60. Ausgabe, Seite 1393 ist ein Röhrenkessel-Kondensator mit eingewalzten Innenrohren bekannt. Aus dieser Veröffentlichung kann der Hinweis entnommen werden, dass Innenrohre in Behälterwandungen mittels Presspassungen befestigt werden können. Die Verwendung von Presspassungen in derartigen Wärmetauschern ist jedoch unproblematisch, da an den dort mittels Presspassungen befestigten Innenrohren keine hohen mechanischen Kräfte auftreten. Da aber bei der Montage von Rohrverteilern, deren Anschlussstutzen beim Einbau in Heizungsanlagen mit Rohrleitungen und Absperrventilen verschraubt werden, hohe mechanische Kräfte im Bereich der Anschlussstutzen auftreten, sah der Fachmann bisher keine Möglichkeit, bei Rohrverteilern Presspassungen zu verwenden. Erst durch die erfindungsgemässe Kombination von Presspassungen und Schweiss- oder Lötverbindungen bei einem Rohrverteiler mit waagerechter Trennwand lassen sich Presspassungen auch bei Rohrverteilern in vorteilhafter Weise anwenden.

Mit dem erfindungsgemässen Rohrverteiler erhält man durch die Verwendung von Presspassungen eine erhebliche Fertigungsvereinfachung und Energieeinsparung bei der Fertigung. Durch die Kombination mit Schweissverbindungen im Bereich des Gehäuses erhält man die erforderliche Stabilität, so dass die Anschlussstutzen auch höheren Torsionskräften standhalten, wie sie beim Festschrauben von Ventilen an den Anschlussstutzen auftreten können.

Eine Weiterbildung der Erfindung sieht vor, dass die Durchführungen mit den zugehörigen Anschlussstutzen dichtende Presspassungen bilden. Dies hat den Vorteil, dass die Anschlussstutzen, bevor sie mit dem Gehäuse verschweisst oder verlötet werden, nicht durch zusätzliche Massnahmen fixiert werden müssen. Ausserdem tritt beim Verlöten der Anschlussstutzen mit dem Gehäuse ein Kapillareffekt auf, wodurch eine besonders gute Lötverbindung erhalten wird.

Um eine grössere Anlagefläche im Bereich der Presspassungen zu erhalten, ist weiterhin vorgesehen, dass die Öffnungen angeformte Borde haben, die an die Anschlussstutzen angepresst sind.

Das Verfahren zur Herstellung eines Rohrverteilers gemäss Anspruch 1 ist im Anspruch 4 gekennzeichnet.

Die Erfindung wird nachfolgend anhand der Zeichnung näher erläutert. Es zeigen:

Fig. 1 einen erfindungsgemässen Rohrverteiler und

Fig. 2 einen Ausschnitt einer Seitenansicht des in Fig. 1 dargestellten Rohrverteilers im Schnitt.

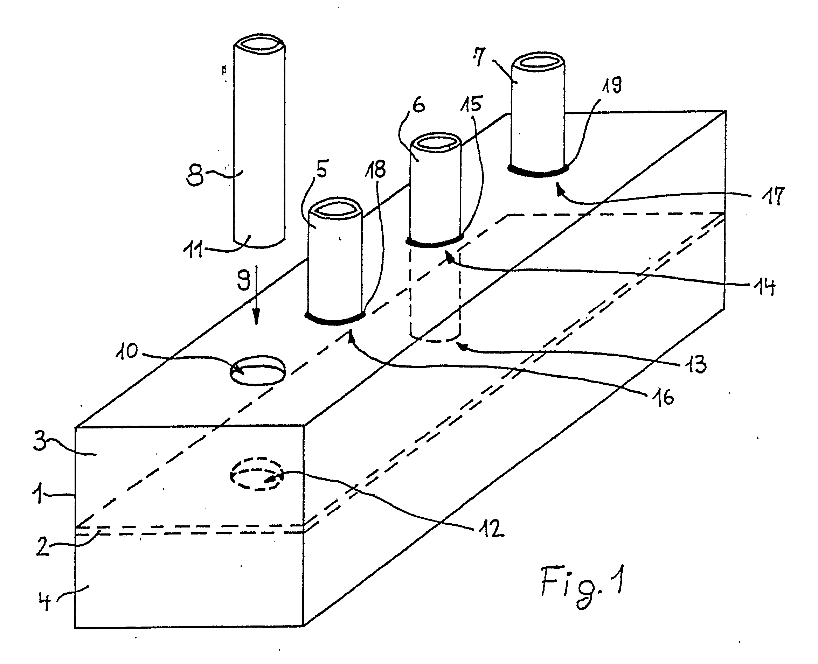

Das Gehäuse 1 des in der Fig. 1 dargestellten Rohrverteilers ist durch eine Trennwand 2 in eine Vorlaufkammer 3 und eine Rücklaufkammer 4 unterteilt. Die Trennwand 2 ist, da sie sich im Gehäuse 1 befindet und dadurch verdeckt ist, durch unterbrochene Linien andeutungsweise dargestellt. Der Rohrverteiler ist mit drei Anschlussstutzen 5, 6, 7 bestückt.

Fig. 1 zeigt einen noch nicht mit dem Rohrverteiler verbundenen weiteren Anschlussstutzen 8, der entsprechend der angegebenen Pfeilrichtung 9 durch eine im Gehäuse vorgesehene Durchführung 10 in den Rohrverteiler eingeführt werden kann.

Dabei wird dieser Anschlussstutzen 8 so weit eingeführt, dass er mit seinem unteren Ende 11 in eine in der Trennwand 2 befindliche Öffnung 12 hineinragt. Die Öffnung 12 ist in ihrem Durchmesser dem äusseren Durchmesser des Endes 11 des Anschlussstutzens 8 angepasst. Die Durchführung 10 hat einen geringfügig grösseren Durchmesser als die Öffnung 12, um ein problemloses Durchführen des Anschlussstutzens 8 zu gewährleisten.

Nachdem der Anschlussstutzen 8 mit seinem Ende 11 in die Öffnung 12 eingesetzt ist, kann der Anschlussstutzen 8 im Bereich der Öffnung 12, d.h. an seinem Ende 11 durch ein Werkzeug aufgedehnt werden. Auf diese Weise wird der Anschlussstutzen 8 in die in der Trennwand 2 befindlichen Öffnung 12 dicht eingepresst. Auch der Anschlussstutzen 6 ist mittels einer Presspassung in einer Öffnung 13 mit der Trennwand 2 verbunden. Im Bereich der Durchführungen 10, 14 sind die Anschlussstutzen 8, 6 jeweils durch eine wie beim Anschlussstutzen 6 dargestellte Schweissnaht 15 mit dem Gehäuse 1 verbunden.

Die Anschlussstutzen 5 und 7 sind nicht zur Trennwand 2 geführt, sondern münden in die Vorlaufkammer 3.

Zu diesem Zweck sind sie in hier nicht näher dargestellte Öffnungen 16, 17 des Gehäuses 1 eingesetzt. Eine Schweissnaht 18, 19 verbindet diese Anschlussstutzen 5, 7 mit dem Gehäuse 1. Die Öffnungen 16, 17 können ebenfalls wie die Öffnungenn 12, 13 der Trennwand 2 an den Durchmesser der zugehörigen Anschlussstutzen 5, 7 angepasst sein. Dadurch können die Anschlussstutzen 5, 7 ebenfalls durch eine Presspassung befestigt werden. Um eine hohe mechanische Stabilität zu erhalten, werden aber normalerweise sämtliche Anschlussstutzen 5 bis 8 mit dem Gehäuse 1 verschweisst. Die Anschlussstutzen 5 bis 8 sind durch die Presspassungen für den Schweissvorgang so gut befestigt, dass das sonst erforderliche vorherige punktweise Fixieren durch Schweisspunkte wegfallen kann. Das Herstellungsverfahren wird somit durch die Presspassungen erheblich vereinfacht.

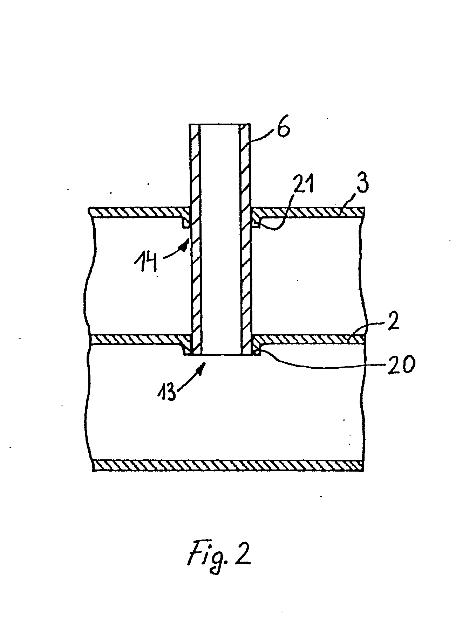

In Fig. 2 ist ein Teil des Rohrverteilers von Fig. 1 im Schnitt dargestellt. An der Öffnung 13 und Durchführung 14 sind Borde 20 und 21 angeformt, die gegen den Anschlussstutzen 6 gepresst werden können, um dichte Pressverbindungen mit dem Rohrverteiler herzustellen. Zu diesem Zweck kann auch der Anschlussstutzen 6 im Bereich der Öffnung 13 und der Durchführung 14 aufgedehnt werden. Um eine höhere mechanische Stabilität zu erreichen, kann der Anschlussstutzen 6 zusätzlich mit dem Rohrverteiler verschweisst oder verlötet werden.

## Patentansprüche

1. Rohrverteiler für Heizungsanlagen, dessen Gehäuse (1) durch eine Trennwand (2) in eine Vorlauf- (3) und eine Rücklaufkammer (4) unterteilt ist, der zum Anschliessen von Vorlauf- und Rücklaufleitungen senkrecht zur Trennwand angeordnete Anschlussstutzen (5, 7; 6, 8) hat, von denen die einen (6, 8) durch im Gehäuse befindliche Durchführungen (10, 14) bis zu in der Trennwand vorgesehene Öffnungen (12, 13) durchgeführt sind und die anderen (5, 7) direkt an im Gehäuse vorgesehenen Öffnungen (16, 17) aufgesetzt sind, dadurch gekennzeichnet, dass die bis zur Trennwand (2) geführten Anschlussstutzen (6, 8) in den in der Trennwand (2) vorgesehenen Öffnungen (12, 13) durch eine Presspassung dichtend befestigt sind; dass die im Gehäuse (1) vorgesehenen Öffnungen (16, 17) so an den Aussendurchmesser der zugehörigen Anschlussstutzen (5, 7) angepasst sind, dass diese Anschlussstutzen (5, 7) mit den zugehörigen Öffnungen (16, 17) Presspassungen bilden; und dass sämtliche Anschlussstutzen (5, 6, 7, 8) zusätzlich mit dem Gehäuse (1) verschweisst oder verlötet sind.

2. Rohrverteiler nach Anspruch 1, dadurch gekennzeichnet, dass die Durchführungen (10, 14) mit den zugehörigen Anschlussstutzen (6, 8) dichtende Presspassungen bilden.

3. Rohrverteiler nach einem der Ansprüche 1 oder 2, dadurch gekennzeichnet, dass die Öffnungen (12, 13, 16, 17) angeformte Borde (20, 21) haben, die an die Anschlussstutzen (5 bis 8) angepresst sind.

4. Verfahren zur Herstellung eines Rohrverteilers gemäss Anspruch 1, dadurch gekennzeichnet, dass die Anschlussstutzen (5 bis 8) zunächst in die Öffnungen (12, 13; 16, 17) eingesetzt werden, dass die Anschlussstutzen (5 bis 8) im Bereich der Öffnungen (12, 13; 16, 17) aufgeweitet werden, so dass sie an den Rand der Öffnungen (12, 13; 16, 17) angepresst werden, und dass dann sämtliche Anschlussstutzen (5 bis 8) mit dem Gehäuse (1) verschweisst oder verlötet werden.

## Claims

1. Pipe distributor for heating plants whose housing (1) is divided by a partition (2) into a supply chamber (3) and a return chamber (4), and which has unions (5, 7; 6, 8) for connecting supply and return pipes and arranged perpendicular to the partition, with part of said unions (6, 8) passed through holes (10, 14) in the housing and extending to openings (12, 13) in the partition, and the others (5, 7) placed directly on openings (16, 17) in the housing, characterized in that the unions (6, 8) extending to the partition (2) are tightly fixed in the openings (12, 13) in the partition (2) by a press fit, that the openings (16, 17) in the housing (1) are so adapted to the outside diameters of the associated unions (5, 7) that press fits are obtained between said unions (6, 7) and the associated openings (16, 17), and that all unions (5, 6, 7, 8) are additionally welded or soldered to the housing (1).

2. A pipe distributor as claimed in claim 1, characterized in that a tight press fit exists between the holes (10, 14) and the associated unions (6, 8).

3. A pipe distributor as claimed in claim 1 or 2, characterized in that the openings (12, 13, 16, 17) have integral flanges (20, 21) which are pressed against the unions (5 to 8).

4. Method of manufacturing a pipe distributor as claimed in claim 1, characterized in that the unions (5 to 8) are inserted into the openings (12, 13; 16, 17), that the unions (5 to 8) are then expanded so as to be pressed against the rims of the openings (12, 13; 16, 17), and that all unions (5 to 8) are finally welded or soldered to the housing (1).

**Revendications**

1. Répartiteur tubulaire pour installations de chauffage, dont le boîtier (1) est subdivisé par une cloison séparatrice (2) en une chambre d'arrivée (3) et une chambre de retour (4), et qui comporte, en vue du raccordement de conduits d'arrivée et de retour, des manchons de raccordement (5, 7; 6, 8) disposés perpendiculairement à ladite cloison séparatrice et dont les uns (6, 8) sont prolongés jusqu'à des orifices (12, 13) élaborés dans la cloisin séparatrice en empruntant des passages traversants (10, 14) pratiqués dans le boîtier, les autres manchons (5, 7) étant directement placés sur des orifices (16, 17) prévus sur ledit boîtier, répartiteur caractérisé par le fait que les manchons de raccordement (6, 8) se prolongeant jusqu'à la cloison séparatrice (2) sont fixés hermétiquement par un adjustement par serrage par dilatation dans les orifices (12, 13), prévus dans ladite cloison séparatrice (2); par le fait que les orifices (16, 17) élaborés dans le boîtier (1) sont adaptés au diamètre externe des manchons de raccordement associés (5, 7), de telle sorte que ces manchons de raccordement (5, 7) forment des ajustements par serrage conjointement aux orifices associés (16, 17); et par le fait que tous les manchons de raccordement (5, 6, 7, 8) sont en plus solidarisés par soudage ou par brassage avec ledit boîtier (1).

2. Répartiteur tubulaire selon la revendication 1, caractérisé par le fait que les passages traversants (10, 14) forment des ajustements hermétiques par serrage avec les manchons de raccordement associés (6, 8).

3. Répartiteur tubulaire selon l'une des revendications 1 ou 2, caractérisé par le fait que les orifices (12, 13, 16, 17) comportent des collerettes (20, 21) conformées d'un seul tenant et pressées contre les manchons de raccordement (5 à 8).

4. Procédé de fabrication d'un répartiteur tubulaire selon la revendication 1, caractérisé par le fait que les manchons de raccordement (5 à 8) sont tout d'abord insérés dans les orifices (12, 13; 16, 17); par le fait que les manchons de raccordement (5 à 8) sont élargis, au voisinage desdits orifices (12, 13; 16, 17), de manière à être pressés contre le bord de ces orifices (12, 13; 16, 17); et par le fait que tous les manchons de raccordement (5 à 8) sont ensuite solidarisés par soudage ou par brasage avec le boîtier (1).

Fig.1

Fig. 2